# EUROPÄISCHE PATENTSCHRIFT

(11) **EP 2 035 872 B1**
(45) Veröffentlichungstag und Bekanntmachung des Hinweises auf die Patenterteilung: **07.12.2011**
(21) Anmeldenummer: 07729823.0
(22) Anmeldetag: 04.06.2007
(51) Int. Cl.: G02B 6/35, F02P 23/04

(54) **OPTISCHER VERTEILER FÜR EIN LASERBASIERTES ZÜNDSYSTEM UND BETRIEBSVERFAHREN HIERFÜR**
OPTICAL DISTRIBUTOR FOR A LASER-BASED IGNITION SYSTEM, AND METHOD FOR THE OPERATION THEREOF
DISTRIBUTEUR OPTIQUE DESTINÉ À UN SYSTÈME D'ALLUMAGE LASER ET SON PROCÉDÉ DE FONCTIONNEMENT

(30) Priorität: 20.06.2006 DE 102006028274
(43) Veröffentlichungstag der Anmeldung: 18.03.2009
(73) Patentinhaber: Robert Bosch GmbH, 70442 Stuttgart (DE)
(72) Erfinder: VOGEL, Manfred, 71254 Ditzingen (DE); HERDEN, Werner, 70839 Gerlingen (DE); RIDDERBUSCH, Heiko, 70567 Stuttgart-Moehringen (DE)
(86) Internationale Anmeldenummer: PCT/EP2007/055435
(87) Internationale Veröffentlichungsnummer: WO 2007/147719

(56) Entgegenhaltungen:
- EP-A- 0 927 894
- WO-A-02/056096
- WO-A-02/081904
- JP-A- 57 006 805
- US-A- 5 920 667
- US-A1- 2006 037 572

## Beschreibung

### Stand der Technik

Die Erfindung betrifft einen optischen Verteiler zur Verteilung von Licht, insbesondere Laserlicht, zwischen mindestens einem optischen Eingang und mindestens einem von mehreren optischen Ausgängen.

Ferner betrifft die vorliegende Erfindung ein Betriebsverfahren für einen derartigen optischen Verteiler.

Optische Verteiler sind aus dem Gebiet der optischen Nachrichtentechnik bekannt, insbesondere als sog. faseroptische Leistungsteiler, die Strahlungsleistung aus einer Eingangsfaser auf eine Vielzahl von Ausgangsfasern aufteilen. Nachteilig bei solchen faseroptischen Leistungsteilern ist insbesondere die Tatsache, dass die den Ausgangsfasern zugeführte Strahlungsleistung üblicherweise um Größenordnungen geringer ist als die in der Eingangsfaser vorhandene Strahlungsleistung.

Neben derartigen faseroptischen Leistungsteilern, die üblicherweise einen diskreten Aufbau aufweisen, sind auch verteilte Kopplerstrukturen bekannt, bei denen die Aufteilung der Strahlungsleistung von der Eingangsfaser auf die Ausgangsfasern über einen mehr oder weniger räumlich ausgedehnten Bereich erfolgt.

Neben diesen Grundtypen von optischen Leistungsteilern beziehungsweise Verteilern sind aus der optischen Nachrichtentechnik auch weitere Kopplerstrukturen bekannt, beispielsweise Faseranschliffkoppler, Schmelzkoppler und dergleichen.

Alle diese bekannten Koppler beziehungsweise optischen Verteiler haben einen verhältnismäßig komplizierten Aufbau, weisen dementsprechend hohe Fertigungskosten auf und sind überdies ungeeignet zum Einsatz im Kraftfahrzeugbereich oder in anderen Betriebsumgebungen mit besonders schwierigen Umgebungsbedingungen wie beispielsweise Vibrationen, hohen Temperaturschwankungen und dergleichen. Weitere optische Verteiler sind aus de WO 02/056096 A1, der EP-A-0 927 894, der JP 57 006805A, der US 2006/037572 A1 und der US-A-5 920 667 bekannt.

### Offenbarung der Erfindung

Demgemäß ist es Aufgabe der vorliegenden Erfindung, einen optischen Verteiler der eingangs genannten Art und ein Betriebsverfahren hierfür derart weiterzubilden, dass ein einfacher, verhältnismäßig kostengünstiger Aufbau gegeben ist und gleichzeitig eine flexible Einsetzbarkeit auch unter schwierigen Umgebungsbedingungen gewährleistet ist.

Diese Aufgabe wird bei einem optischen Verteiler der eingangs genannten Art erfindungsgemäß dadurch gelöst, dass der optische Verteiler mindestens einen bewegbar angeordneten Lichtleiter aufweist und ein Stellglied zur Bewegung des mindestens einen Lichtleiters, wobei der bewegbar angeordnete Lichtleiter so durch das Stellglied bewegbar ist, dass mindestens einer der optischen Eingänge über den Lichtleiter mit mindestens einem der optischen Ausgänge verbindbar ist.

### Vorteile der Erfindung

Der erfindungsgemäß bewegbar angeordnete Lichtleiter und das zu seiner Bewegung vorgesehene Stellglied ermöglichen bei einem verhältnismäßig geringen Konstruktionsaufwand eine flexible Weiterleitung beziehungsweise Verteilung von Licht oder allgemein optischer Strahlungsleistung zwischen einem oder mehreren Eingängen und einem oder mehreren Ausgängen des optischen Verteilers.

Im Gegensatz zu den aus der optischen Nachrichtentechnik bekannten optischen Verteilern beziehungsweise Leistungsteilern beruht der erfindungsgemäße optische Verteiler weitgehend auf Komponenten, die entsprechend robust für einen Einsatz beispielsweise im Kraftfahrzeugbereich ausgelegt werden können und die kostengünstig hergestellt werden können und wartungsarm sind.

Ein weiterer, besonderer Vorteil des erfindungsgemäßen optischen Verteilers besteht darin, dass aufgrund des bewegbar angeordneten Lichtleiters zur Verteilung der Strahlungsleistung nahezu keine Übertragung von Strahlungsleistung außerhalb des Lichtleiters beziehungsweise der optischen Ein- und Ausgänge erfolgt. Demnach ist die Übertragung von Strahlungsleistung über "offene Lichtwege", wie beispielsweise luftgefüllte Bereiche zwischen zwei Faserenden, minimal, so dass sich insgesamt ein äußerst verlustarmer Aufbau ergibt.

Als eine weitere Lösung der Aufgabe der vorliegenden Erfindung ist ein Betriebsverfahren für einen optischen Verteiler gemäß Patentanspruch 11 angegeben.

Weitere vorteilhafte Ausgestaltungen der vorliegenden Erfindung sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

### Kurze Beschreibung der Zeichnung

In der Zeichnung zeigt:
- Figur 1: eine schematische Darstellung eines laserbasierten Zündsystems einer Brennkraftmaschine,
- Figur 2a: einen schematisch dargestellten teilweisen Querschnitt durch einen erfindungsgemäßen optischen Verteiler gemäß einer ersten Ausführungsform,
- Figur 2b: eine Detailansicht eines bewegbaren Lichtleiters des optischen Verteilers aus Figur 2a,
- Figur 2c: eine weitere Ausführungsform des erfindungsgemäßen optischen Verteilers,
- Figur 3: eine Draufsicht auf ein elektromagnetisches Stellglied des erfindungsgemäßen optischen Verteilers,
- Figur 4a - 5b: weitere Ausführungsformen des erfindungsgemäßen optischen Verteilers, und
- Figur 6: eine weitere Detailansicht eines bewegbaren Lichtleiters.

### Beschreibung der Ausführungsbeispiele

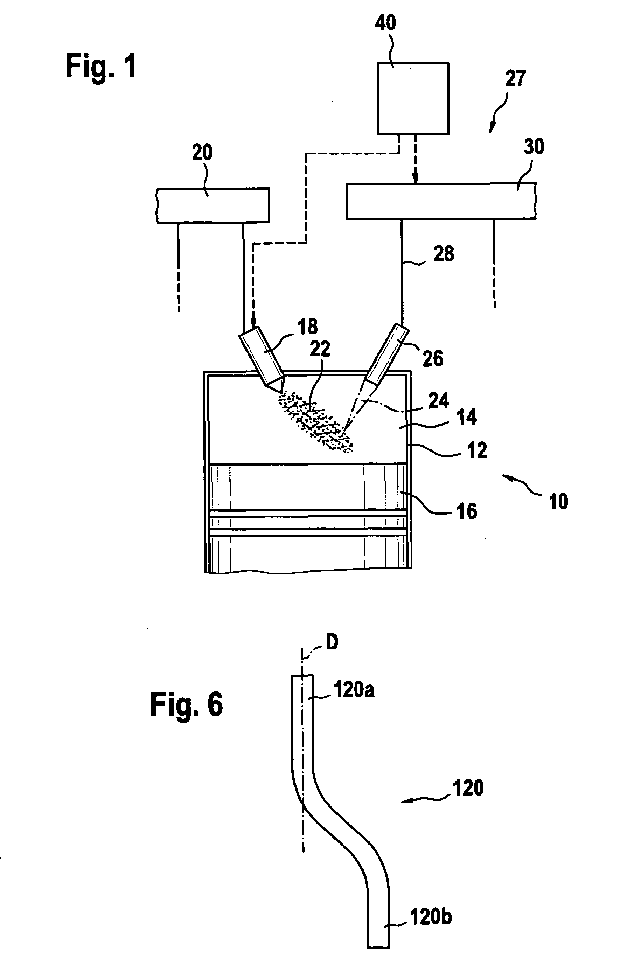

Figur 1 zeigt schematisch eine Brennkraftmaschine 10, die zum Antrieb eines nicht in Figur 1 abgebildeten Kraftfahrzeugs dient. Die Brennkraftmaschine 10 umfasst hierzu mehrere Zylinder, von denen in Figur 1 nur einer dargestellt und mit dem Bezugszeichen 12 bezeichnet ist. Ein Brennraum 14 des Zylinders 12 wird von einem Kolben 16 begrenzt. Kraftstoff gelangt in den Brennraum 14 direkt durch einen Injektor 18, der an einen auch als Rail beziehungsweise Common-Rail bezeichneten Kraftstoffdruckspeicher 20 angeschlossen ist.

Die in Figur 1 abgebildete Brennkraftmaschine 10 weist ein laserbasiertes Zündsystem 27 auf, bei dem eine in den Brennraum 14 eingespritzte Kraftstoffmenge 22 mittels eines Laserstrahls beziehungsweise eines Laserimpulses 24 entzündet wird. Der Laserimpuls 24 wird mittels einer dem Zylinder 12 zugeordneten Lasereinrichtung 26 in den Brennraum 14 abgestrahlt. Die Lasereinrichtung 26 ist Bestandteil des laserbasierten Zündsystems 27, das neben weiteren dezentralen, d.h. verschiedenen Zylindern zugeordneten Lasereinrichtungen (nicht gezeigt) auch eine zentrale Laserlichtquelle 30, beispielsweise einen Halbleiterlaser, sowie einen nicht in Figur 1 abgebildeten erfindungsgemäßen optischen Verteiler aufweist, der Laserlicht von der zentralen Laserlichtquelle 30 an die dezentralen Lasereinrichtungen 26 verteilt. Der erfindungsgemäße optische Verteiler kann beispielsweise in der zentralen Laserlichtquelle 30 integriert sein.

Eine Steuerung des laserbasierten Zündsystems 27 bzw. der zentralen Laserlichtquelle 30 und des optischen Verteilers kann beispielsweise über ein der Brennkraftmaschine 10 zugeordnetes Steuergerät 40 erfolgen, das in bekannter Weise durch eine Ansteuerung des Injektors 18 auch die Zumessung von Kraftstoff 22 in den Brennraum 14 des Zylinders 12 bewirkt.

Die Lasereinrichtung 26 wird über eine Lichtleitereinrichtung 28 mit dem von dem optischen Verteiler verteilten Laserlicht gespeist, welches beispielsweise zum Pumpen eines lokal in der Lasereinrichtung 26 vorgesehenen, nicht näher dargestellten Resonators dient, der seinerseits - durch das Pumplaserlicht angeregt - den zur Zündung erforderlichen Laserimpuls 24 erzeugt.

Alternativ kann ein zur Zündung der Kraftstoffmenge 22 vorgesehener Laserimpuls 24 direkt durch die zentrale Laserlichtquelle 30 erzeugt und über den erfindungsgemäßen optischen Verteiler sowie die Lichtleitereinrichtung 28 an die Lasereinrichtung 26 weitergeleitet werden.

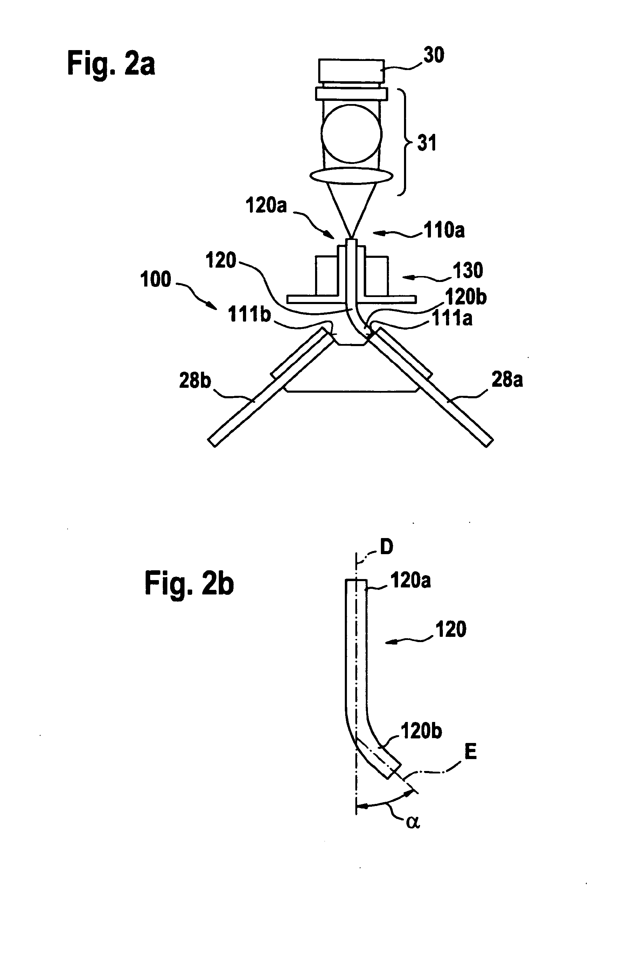

In beiden Fällen ergibt sich durch die Anwendung des erfindungsgemäßen in Figur 2a schematisch in einer Seitenansicht dargestellten optischen Verteilers 100 ein bedeutender Vorteil, weil insgesamt nur noch eine zentrale Laserlichtquelle 30 vorzusehen ist und nicht etwa jeder Zylinder 12 der Brennkraftmaschine 10 bzw. eine zugehörige Lasereinrichtung 26 z.B. mit einem eigenen Halbleiterlaser ausgestattet sein muss.

Durch den Einsatz des erfindungsgemäßen optischen Verteilers 100 ist es ferner besonders vorteilhaft möglich, die zentrale Laserlichtquelle 30 (Figur 1) von einem Motorblock der Brennkraftmaschine 10 entfernt anzuordnen, so dass sie nicht direkt den hohen Temperaturschwankungen und Vibrationen in einer unmittelbaren Umgebung der Brennkraftmaschine 10 ausgesetzt ist.

Der erfindungsgemäße optische Verteiler 100 aus Figur 2a weist einen bewegbar angeordneten Lichfleker 120 auf, dessen Eingangsabschnitt 120a gleichzeitig einen optischen Eingang 110a des optischen Verteilers 100 darstellt. Wie aus Figur 2a ersichtlich, ist ein Ausgangsabschnitt 120b des Lichtleiters 120 gegenüber dem Eingangsabschnitt 120a gekrümmt. Diese Krümmung ist gemäß der in Figur 2b abgebildeten Detailansicht so ausgebildet, dass eine Längsachse E des Ausgangsabschnitts 120b des Lichtleiters 120 einen von 0° verschiedenen Winkel α mit einer Längsachse D des restlichen Lichtleiters 120 beziehungsweise seines Eingangsabschnitts 120a einschließt.

Der erfindungsgemäß gekrümmte Ausgangsabschnitt 120b des Lichtleiters 120 ermöglicht durch entsprechendes Drehen des Lichtleiters 120 um eine in Figur 2a vertikal durch eine strichpunktierte Linie symbolisierte Drehachse, die im Wesentlichen der Längsachse D aus Figur 2b entspricht, das wahlweise optische Verbinden des Eingangsabschnitts 120a mit einer ersten Lichdeitereinrichtung 28a beziehungsweise einer zweiten Lichtleitereinrichtung 28b, die beispielsweise unterschiedlichen Zylindern der Brennkraftmaschine 10 (Figur 1) beziehungsweise deren Lasereinrichtungen 26 zugeordnet sind und die dem optischen Verteiler 100 an seinem optischen Eingang 110a zugeleitetes Laserlicht an die entsprechenden Lasereinrichtungen 26 übertragen.

Die in Figur 2a abgebildete Konfiguration ermöglicht demnach die wahlweise Verteilung von Laserlicht beziehungsweise sonstiger elektromagnetischer Strahlung, die durch den Lichtleiter 120 geführt werden kann, von dem optischen Eingang 110a zu entsprechenden optischen Ausgängen 111a, 111b, in deren Bereich vorliegend die Lichtleitereinrichtungen 28a, 28b angeordnet sind.

Ein besonderer Vorteil bei der in Figur 2a abgebildeten Ausführungsform des erfindungsgemäßen optischen Verteilers 100 besteht darin, dass der Eingangsabschnitt 120a des Lichtleiters 120 ortsfest ist, sich also nicht relativ zu der Laserlichtquelle 30 beziehungsweise einer zur Einkopplung des Laserlichts in den optischen Eingang 110a vorgesehenen Optik 31 bewegt. Ein weiterer Vorteil der in Figur 2a abgebildeten Ausführungsform des erfindungsgemäßen optischen Verteilers 100 besteht darin, dass der Lichtleiter 120 starr ausgebildet sein kann, das heißt insbesondere nicht flexibel sein muss beziehungsweise während eines Betriebs verformt wird. Dadurch ist eine besonders hohe Präzision bei der Verteilung von Strahlungsleistung auf die verschiedenen optischen Ausgänge 111a, 111b gegeben und der Lichtleiter 120 unterliegt gleichzeitig einem besonders geringen Verschleiß.

Die starre Ausbildung des Lichtleiters 120 ermöglicht ferner die Verwendung vieler unterschiedlicher Materialien zur Herstellung des Lichtleiters 120. Beispielsweise kann der Lichtleiter 120 durch eine herkömmliche lichtleitende Faser gebildet sein. Um den erforderlichen Biegewinkel α (vergleiche Figur 2b) auch über eine längere Betriebsdauer einzuhalten, ist in diesem Fall eine nicht abgebildete mechanische Fixierung des Lichtleiters 120, beispielsweise in Form einer metallischen Hülse oder dergleichen empfehlenswert. Alternativ hierzu kann der Lichtleiter 120 beispielsweise jedoch auch aus Glas oder einem anderem mineralischen Material hergestellt sein, das sich zur bestimmungsgemäßen Lichtleitung von dem Eingangsabschnitt 120a zu dem Ausgangsabschnitt 120b eignet. In diesem Fall können die Endbereiche des Lichtleiters 120 sehr vorteilhaft auch einen besonderen Schliff aufweisen, beispielsweise um eine effizientere Ein- beziehungsweise Auskopplung von Laserlicht in den beziehungsweise aus dem Lichtleiter 120 zu ermöglichen, das heißt, bei einer derartigen Ausbildung des Lichtleiters 120 ist die Integration von optischen Elementen direkt in den Lichtleiter 120 möglich. Eine Kombination verschiedener Materialien zur Ausbildung des Lichtleiters 120 ist ebenfalls möglich.

Erfindungsgemäß ist der Lichtleiter 120 so auszulegen, dass der lichtleitende Querschnitt in dem Ausgangsabschnitt 120b geringfügig kleiner ist als ein lichtleitender Querschnitt von in den optischen Ausgängen 111a, 111b angeordneten Lichtleitereinrichtungen 28a, 28b. Hierdurch ist ein Toleranzausgleich bezüglich der Positionierungsgenauigkeit des Lichtleiters 120 zwischen den verschiedenen Arbeitspositionen gewährleistet.

Ganz allgemein ist die Geometrie des optischen Verteilers 100 derart zu wählen, dass die Luftspalte zwischen dem Lichtleiter 120 und einer Lichtquelle 30 beziehungsweise der Optik 31 oder im Bereich der optischen Ausgänge 1111a, 111b angeordneten Lichtleitereinrichtung 28a, 28b möglichst klein sind, um Transmissionsverluste zu verringern und damit den Wirkungsgrad des optischen Verteilers 100 zu steigern. Prinzipiell ist auch eine Evakuierung des Arbeitsbereichs um den bewegbaren Lichtleiter 120 möglich.

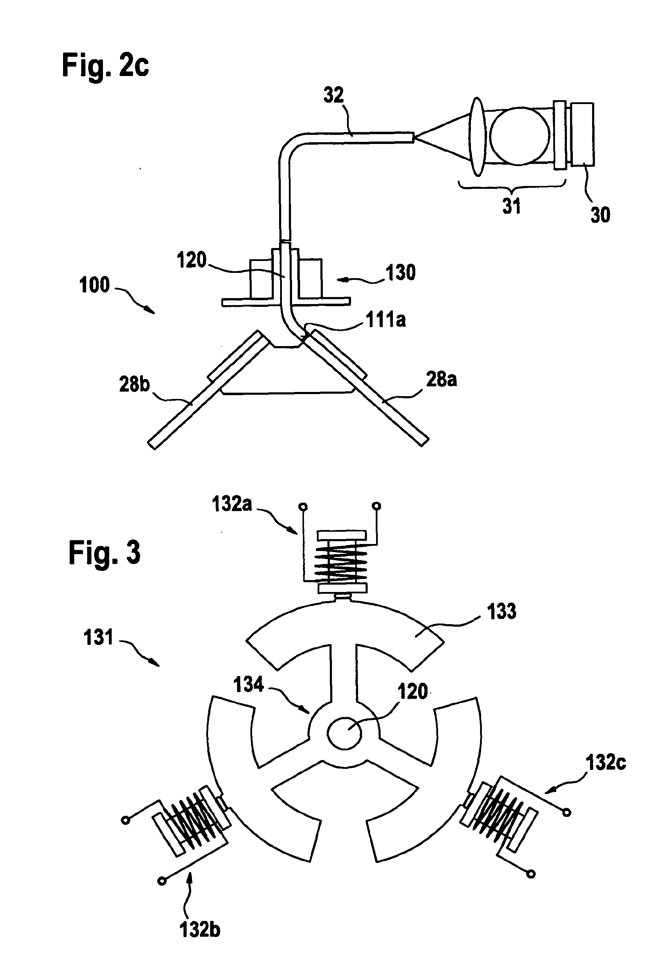

Wie aus Figur 2c ersichtlich, ist es ferner möglich, dem Lichtleiter 120 eingangsseitig das Laserlicht auch über eine Lichtleitereinrichtung 32, wie beispielsweise eine optische Faser oder dergleichen zuzuführen, anstelle einer direkten Einkopplung mittels der Optik 31, wie dies in Figur 2a abgebildet ist. Dadurch ist es besonders vorteilhaft möglich, die Laserlichtquelle 30 und eine entsprechende Optik 31 räumlich entfernt von dem optischen Verteiler 100 anzuordnen.

Zur wahlweisen Verteilung des dem optischen Verteiler 100 eingangsseitig zugeführten Laserlichts auf die optischen Ausgänge 111a, 111b ist erfindungsgemäß ein Stellglied 130 vorgesehen, vgl. Figur 2a, das zur Bewegung des drehbar angeordneten Lichtleiters 120 ausgebildet ist. Das Stellglied 130 kann beispielsweise als Schrittmotor ausgebildet sein, wie dies in der in Figur 3 abgebildeten Draufsicht dargestellt ist. Der Schrittmotor 131 weist einen Anker 133 und drei jeweils auf unterschiedliche Pole des Ankers 133 wirkende Magnetspulen 132a, 132b, 132c auf. Die Magnetspulen 132a, 132b, 132c sind durch eine nicht abgebildete Ansteuerschaltung mit unterschiedlichen Steuerströmen beaufschlagbar und bilden dementsprechend ein Magnetfeld aus, das auf den Anker 133 wirkt und diesen entsprechend in Drehbewegung versetzt. In der erfindungsgemäß hohl ausgebildeten Achse 134 des Ankers 133 ist der Lichtleiter 120 angeordnet und drehfest mit dem Anker 133 verbunden. Dadurch erfährt der Lichtleiter 120 dieselbe Drehbewegung, die sich bei dem Anker 133 in Abhängigkeit der Ansteuerung durch die Magnetspulen 132a, 132b, 132c ergibt.

Bei einer besonders vorteilhaften Ausführungsform des erfindungsgemäßen optischen Verteilers 100 ist der Schrittmotor 131 so ausgebildet, dass die Zahl seiner Haltepositionen der Zahl der optischen Ausgänge 111a, 111b entspricht, so dass durch eine vergleichsweise einfache Ansteuerung des Schrittmotors 131 eine schnelle und zuverlässige Umstellung des optischen Verteilers 100 zwischen den verschiedenen optischen Ausgängen 111a, 111b möglich ist.

Bei dem Einsatz des optischen Verteilers 100 in dem laserbasierten Zündsystem 27 gemäß Figur 1 kann der optische Verteiler 100 beispielsweise sechs optische Ausgänge aufweisen, wobei jeder optische Ausgang einer zylinderindividuellen Lasereinrichtung 26 zugeordnet ist. In diesem Fall weist der Schrittmotor 131 oder ein sonstiges Stellglied vorzugsweise ebenfalls sechs Haltepositionen auf.

Abgesehen von der vorzugsweise zentralen Anbringung des Lichtleiters 120 an dem Anker 133 bzw. in der Achse 134 (Figur 3) des Schrittmotors 131 können auch andere Bauformen von Schrittmotoren zur Realisierung des Stellglieds 130 eingesetzt werden, deren Anker 133 beispielsweise ein besonders geringes rotatorisches Trägheitsmoment aufweist, so dass ein besonders schnelles Umschalten des erfindungsgemäßen optischen Verteilers 100 möglich ist. Platzsparende Scheibenläufer-Schrittmotoren oder dergleichen sind ebenfalls zur Realisierung des Stellglieds 130 verwendbar.

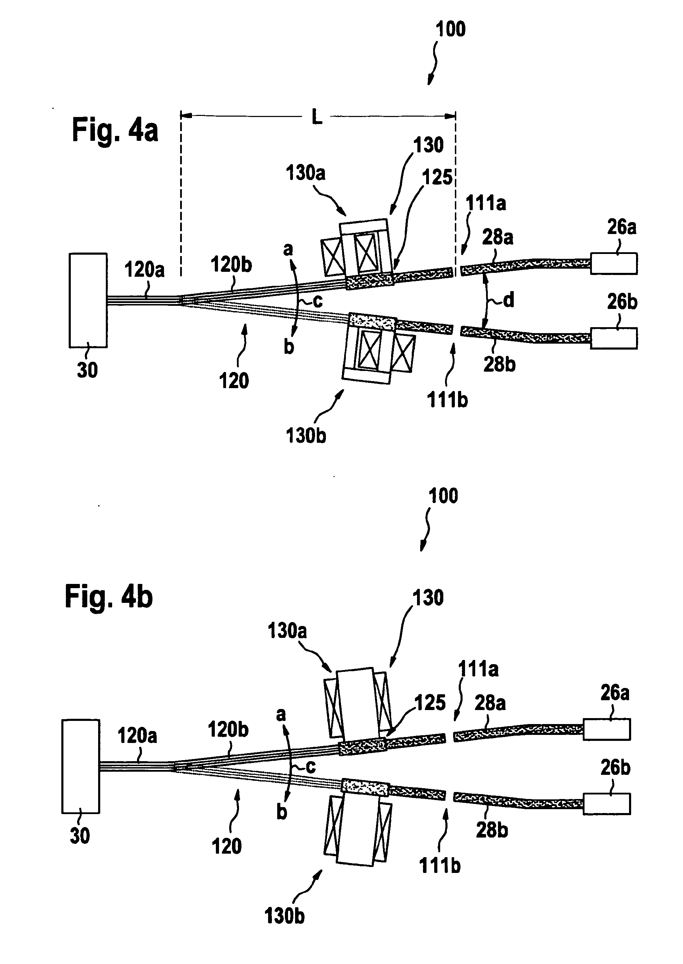

Eine weitere sehr vorteilhafte Ausführungsform des erfindungsgemäßen Verteilers 100 ist in Figur 4a abgebildet.

Auch bei der in Figur 4a gezeigten Ausführungsform ist der Eingangsabschnitt 120a des Lichtleiters 120 ortsfest bezüglich einer den Lichtleiter 120 speisenden Laserlichtquelle 30. Eine gegebenenfalls erforderliche Optik (vergleiche Bezugszeichen 31, Figur 1) ist der Übersichtlichkeit halber nicht in Figur 4a abgebildet.

Im Unterschied zu den anhand der Figuren 2a bis 3 beschriebenen Ausführungsformen der vorliegenden Erfindung ist der Lichtleiter 120 bei der in Figur 4a abgebildeten Ausführungsform nicht drehbar gelagert, sondern flexibel. Dadurch ist ein Ausgangsabschnitt 120b des Lichtleiters 120 unter Einwirkung des elektromagnetischen Stellglieds 130 relativ zu dem Eingangsabschnitt 120a bewegbar. Hierzu ist an dem Ausgangsabschnitt 120b des Lichtleiters 120 ein magnetisches Element 125 vorgesehen, das beispielsweise Hülsenform aufweisen kann und über den flexiblen Lichtleiter 120 schiebbar beziehungsweise mit diesem verbindbar ist.

Das magnetische Element 125 erfährt durch entsprechende Ansteuerung der Elektromagnete 130a,130b des elektromagnetischen Stellglieds 130 unterschiedliche magnetische Feldkräfte, die das magnetische Element 125 und dementsprechend auch das mit dem magnetischen Element 125 verbundene Ende 120b des Lichtleiters 120 zwischen verschiedenen Arbeitspositionen a, b, vergleiche den Doppelpfeil c, hin und her bewegen.

In Figur 4a befindet sich der Lichtleiter 120 beziehungsweise dessen Ausgangsabschnitt 120b in seiner ersten Arbeitsposition a, so dass der Ausgangsabschnitt 120b des Lichtleiters 120 einem Eingangsabschnitt der Lichtleitereinrichtung 28a gegenüberliegt, die zur Versorgung einer ersten Lasereinrichtung 26a mit von der Laserlichtquelle 30 erzeugten Laserlichtpulsen 24 vorgesehen ist. Die durch einen schraffiert in Figur 4a angedeuteten Lichtleiter 120 symbolisierte zweite Arbeitsposition b ist dadurch gekennzeichnet, dass der Ausgangsabschnitt 120b des Lichtleiters 120 einem Eingangsabschnitt einer zweiten Lichtleitereinrichtung 28b gegenüberliegt, die entsprechend einer zweiten Lasereinrichtung 26b zugeordnet ist.

Bei der vorstehend beschriebenen Ausführungsform kann der flexible Lichtleiter 120 beispielsweise als lichtleitende Faser ausgebildet sein, die eine Dicke zwischen etwa 0,5 mm bis etwa 1,5 mm aufweist, und die unter Einwirkung des Stellglieds 130 gezielt gebogen wird, um zwischen den Arbeitspositionen a, b zu wechseln.

Die in Figur 4a durch den Doppelpfeil L symbolisierte Länge des flexiblen Lichtleiters 120 kann beispielsweise etwa 20 mm bis etwa 50 mm betragen. Bei einer bevorzugten Ausführungsform der vorliegenden Erfindung weist das als Hülse ausgebildete magnetische Element 125 eine Länge von etwa 2 mm bis etwa 5 mm auf.

Die Lichdeitereinrichtungen 28a, 28b zur Versorgung der entsprechenden Lasereinrichtungen 26a, 26b können ebenfalls aus lichtleitenden Fasern mit einer Dicke von etwa 0,6 mm bis etwa 1,6 mm bestehen, wobei die entsprechenden Faserenden im Bereich der optischen Ausgänge 111a, 111b vorzugsweise fixiert sind beispielsweise durch ein nicht in Figur 4a abgebildetes Gehäuse beziehungsweise darin vorgesehene Bohrungen zur Aufnahme der Lichtleitereinrichtungen 28a, 28b.

Zur Steigerung der Präzision des in Figur 4a abgebildeten optischen Verteilers 100 können die optischen Ausgänge 111a, 111b auch direkt im Bereich der magnetischen Hülse 125, das heißt in Figur 4a an deren rechtem Ende, angeordnet sein, so dass der Lichtleiter 120 in seinem Ausgangsbereich 120b nicht oder nur unwesentlich über den bzw. die Polschuhe der steuerbaren Magnete 130b, 130b hinausragt.

Eine besondere Formung der Polschuhe der steuerbaren Magnete 130a,130b beispielsweise durch eine kreiszylinderförmige Ausnehmung ermöglicht ein passgenaues Aufsitzen der magnetischen Hülse 125 auf den Polen des jeweiligen Magnets 130a, 130b und dient damit einer weiteren Steigerung der Präzision des erfindungsgemäßen optischen Verteilers 100.

Zur Steigerung der Lebensdauer des optischen Verteilers 100 kann auch eine Dämpfungsschicht z.B. auf den Polschuhen vorgesehen sein, die einen Aufprall der Hülse 125 auf dem betreffenden Polschuh dämpft und damit ggf. Vibrationen des Lichtleiters 120 vermeidet.

Die Umschaltgeschwindigkeit des in Figur 4a abgebildeten optischen Verteilers 100 kann gesteigert werden durch Verkürzung des Abstandes d zwischen den fest an den optischen Ausgängen 111a, 111b angeordneten Lichtleitereinrichtungen 28a, 28b sowie eine Bestromung der Elektromagnete 130a, 130b mit entsprechend großen Steuerströmen.

Eine weitere sehr vorteilhafte Ausführungsform des erfindungsgemäßen optischen Verteilers 100 ist nachfolgend unter Bezugnahme auf Figur 4b beschrieben. Bei dieser Ausführungsform ist das magnetische Element 125 als permanentmagnetisiertes Element ausgebildet und kann beispielsweise wiederum Hülsenform aufweisen, um eine leichte Anbringung des magnetischen Elements 125 an dem Lichtleiter 120 zu ermöglichen. Das permanentmagnetisierte magnetische Element 125 weist vorzugsweise eine radiale Magnetisierung auf, so dass durch eine entsprechende Wechselwirkung des Permanentmagnetfelds des magnetischen Elements 125 mit den Magnetfeldern des elektromagnetischen Stellglieds 130 beziehungsweise dessen steuerbaren Magneten 130a, 130b die Dynamik bei dem Umschalten des optischen Verteilers 100 zwischen seinen Arbeitspositionen a, b gesteigert werden kann.

Für das Umschalten des optischen Verteilers 100 aus seiner ersten Arbeitsposition a, bei dem sich ein Ausgangsabschnitt 120b des Lichtleiters 120 im Bereich des ersten optischen Ausgangs 111a befindet, in seine Arbeitsposition b wird beispielsweise der Elektromagnet 130a so bestromt, dass das magnetische Element 125 von dem Elektromagnet 130a abgestoßen wird, während der steuerbare Elektromagnet 130b so bestromt wird, dass er das magnetische Element 125 anzieht.

Bei der in Figur 4b abgebildeten Ausführungsform des erfindungsgemäßen optischen Verteilers 100 können die Polschuhe der Elektromagneten 130a, 130b ebenfalls vorteilhaft eine an die Außenform der magnetischen Hülse 125 angepasste Form aufweisen. Zusätzlich können im Bereich der Polschuhe der Elektromagnete 130a, 130b Nocken (nicht gezeigt) zur Fixierung der magnetischen Hülse 125 in der ersten beziehungsweise der zweiten Arbeitsposition a, b vorgesehen sein.

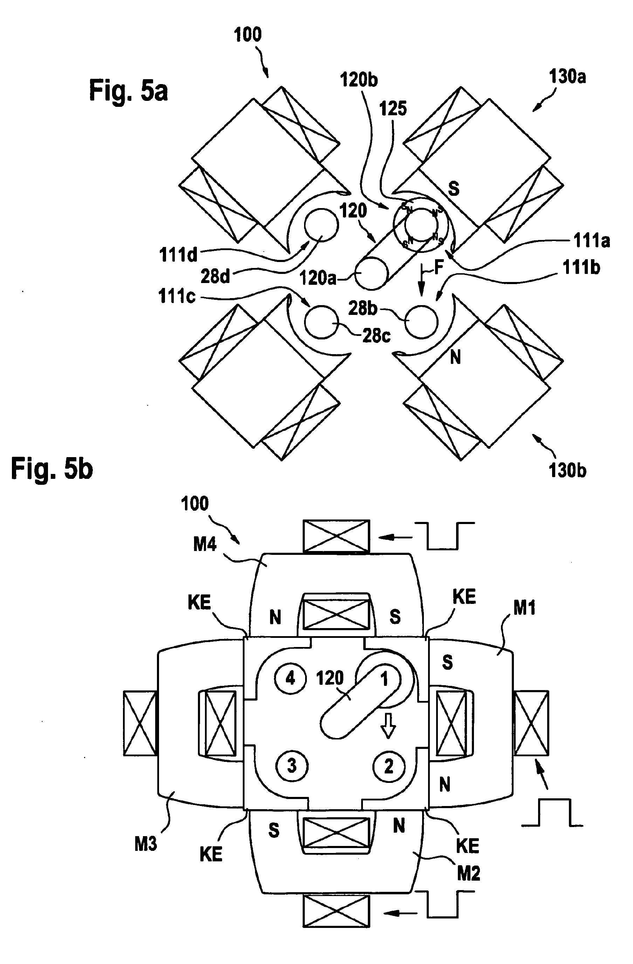

Figur 5a zeigt eine Draufsicht auf den bereits unter Bezugnahme auf Figur 4b beschriebenen optischen Verteiler 100.

Zentral in dem optischen Verteiler 100 angeordnet ist der flexible Lichtleiter 120, dessen zu seinem Eingangsabschnitt 120a gehörende Querschnittsfläche aus der Zeichenebene der Figur 5a herausragt. Neben den bereits aus der Figur 4b ersichtlichen optischen Ausgängen 111a, 111b weist der optische Verteiler 100 gemäß Figur 5a zwei weitere optische Ausgänge 111c, 111d auf. Jedem optischen Ausgang 111a, 111b, 111c, 111d ist eine feststehende Lichtleitereinrichtung 28a, 28b, 28c, 28d zugeordnet, von denen entsprechende Lasereinrichtungen versorgt werden. Die erste feststehende Lichtleitereinrichtung 28a (Figur 4b) ist in der Draufsicht aus Figur 5a nicht zu erkennen, da sich der Lichtleiter 120 in seiner ersten Arbeitsposition a befindet; das heißt, der Ausgangsabschnitt 120b des Lichtleiters 120 befindet sich im Bereich des optischen Ausgangs 111a, so dass der Ausgangsabschnitt 120b des Lichtleiters 120 direkt gegenüber der Eingangs-Querschnittsfläche der feststehenden Lichtleitereinrichtung 28a liegt und eine Verteilung von Laserlicht an die Lichtleitereinrichtung 28a ermöglicht.

Aus Figur 5a ist die permanentmagnetisierte Hülse 125 in ihrer Arbeitsposition ersichtlich, bei der sie in einem formangepassten Bereich des Polschuhs des steuerbaren Elektromagneten 130a aufliegt. Wie aus Figur 5a ersichtlich, ist die magnetische Hülse 125 derart permanentmagnetisiert, dass sich in einem radial äußeren Bereich der magnetische Südpol S und in einem radial inneren Bereich der magnetische Nordpol N befindet.

Zur Bewegung des Ausgangsabschnitts 120b des Lichtleiters 120 wird der erste steuerbare Elektromagnet 130a wie in Figur 5a abgebildet derart angesteuert, dass sein die magnetische Hülse 125 aufnehmender Polschuh einen magnetischen Südpol S ausbildet und dementsprechend eine abstoßende Kraft auf die magnetische Hülse 125 und den Ausgangsabschnitt 120b des mit ihr verbundenen Lichtleiters 120 ausübt. Der zweite steuerbare Elektromagnet 130b ist im Gegensatz hierzu derart angesteuert, dass sein zur Aufnahme der magnetischen Hülse 125 ausgebildeter Polschuh einen magnetischen Nordpol N aufweist, das heißt, anziehend wirkt auf den äußeren Bereich der permanentmagnetisierten Hülse 125. Dadurch ergibt sich insgesamt wie durch den Pfeil F in Figur 5a angedeutet eine in Figur 5a von oben nach unten deutende Kraft auf den Ausgangsabschnitt 120b des Lichtleiters 120, so dass der Lichtleiter 120 entsprechend gebogen wird, wodurch schließlich die permanentmagnetisierte Hülse 125 auf dem formangepassten Polschuh des zweiten steuerbaren Elektromagneten 130b zum Aufliegen kommt. In diesem Zustand wird dem Lichtleiter 120 eingangsseitig zugeführtes Laserlicht an den zweiten optischen Ausgang 111b und damit der Lichtleitereinrichtung 28b zugeführt.

Durch eine entsprechende Ansteuerung der steuerbaren Elektromagneten 130a, 130b sowie der weiteren zwei, in Figur 5a nicht näher bezeichneten steuerbaren Elektromagneten ist eine Hin- und Herbewegung der permanentmagnetisierten Hülse 125 und damit des Ausgangsabschnitts 120b des Lichtleiters 120 zwischen verschiedenen Arbeitspositionen möglich, so dass eine schnelle und zuverlässige Verteilung von Laserlicht an die verschiedenen optischen Ausgänge 111a, 111b, 111c, 111d bewirkt werden kann.

In Figur 5b ist eine weitere Erfindungsvariante angegeben, bei der sich aufgrund der im Vergleich zu Figur 5a geänderten Anordnung der Elektromagnete M1, M2, M3, M4 ein geschlossener magnetischer Kreis zwischen den Polschuhen der einzelnen Elektromagnete ergibt. Hierzu sind insbesondere die magnetisch leitfähigen Koppelelemente KE zwischen den jeweiligen Elektromagneten M1, M2, M3, M4 vorgesehen.

Zum Bewegen des Lichtleiters 120 aus seiner in Figur 5b mit "1" gekennzeichneten ersten Arbeitsposition in eine mit "2" gekennzeichnete Arbeitsposition werden die Elektromagnete M1, M2 und M4 wie in Figur 5b durch die angedeuteten Impulse symbolisiert angesteuert, wodurch sich die abgebildete Magnetfeldkonfiguration ergibt. Da der Elektromagnet M3 vorliegend nicht angesteuert wird, kann sich ein geschlossener magnetischer Kreis über die Elektromagnete M1 bis M4 und die sie verbindenden Koppelelemente KE ausbilden.

Die Ansteuerung der Elektromagneten M1 bis M4 sowie der weiteren beschriebenen elektromagnetischen Stellglieder 130 kann in an sich bekannter Weise mittels Halbleiterschaltern erfolgen, die z.B. in einer Vollbrückenkonfiguration angeordnet sein können, um einen Polaritätswechsel bei der Ansteuerung zu erlauben. Alternativ oder zusätzlich können auch die Wicklungen der Elektromagnete eine Mittenanzapfung aufweisen, um durch alternierenden Betrieb der hierdurch gebildeten Halbwicklungen magnetische Flüsse unterschiedlichen Vorzeichens in dem betreffenden Elektromagnet zu erzeugen.

Neben einer reinen Rotation (Fig. 2a) beziehungsweise Verbiegung (Fig. 4a) des Lichtleiters 120 ist auch eine Kombination der beiden Stelloperationen denkbar, wobei ein entsprechend ausgebildetes Stellglied 130 beziehungsweise mehrere Stellglieder bereitzustellen sind. Alternativ zu der Verwendung von Schrittmotoren können beispielsweise auch elektromagnetisch arbeitende Linearantriebe und dergleichen zum Verbiegen beziehungsweise Bewegen des Lichtleiters 120 eingesetzt werden. Es ist auch denkbar, anstelle von elektromagnetischen Stellgliedern z.B. pneumatische oder piezoelektrische Stellglieder zu verwenden.

Bei einer Verwendung des erfindungsgemäßen optischen Verteilers 100 in einem laserbasierten Zündsystem 27 einer Brennkraftmaschine 10 können die Lichtleitereinrichtungen 28a, 28b,... vorteilhaft kreisförmig und entsprechend einer Zündreihenfolge der Zylinder 12 der Brennkraftmaschine 10 angeordnet sein, so dass ein zyklisches Rotieren des Lichtleiters 120 zu der entsprechenden Lichtleitereinrichtung 28a, 28b,... mit minimalen Stellbewegungen ausreichend ist, um die Zündreihenfolge einzuhalten.

Anstelle der Verteilung von Laserlicht ist es je nach Ausbildung des Lichtleiters 120 selbstverständlich auch möglich, nicht kohärentes Licht mit dem optischen Verteiler 100 der vorliegenden Erfindung zu verteilen. Auch ist ein umgekehrter Betrieb des erfindungsgemäßen optischen Verteilers 100 denkbar, bei dem mehrere in den vorliegend als optischer Ausgang 111a, 111b, .. bezeichneten Bereichen angeordnete Lichtleitereinrichtungen dem optischen Verteiler 100 Strahlungsleistung zuführen, die durch die Einstellung des Lichtleiters 120 in eine vorgebbare Arbeitsposition a, b selektiv an den vorliegend als optischer Eingang 110a bezeichneten Bereich weitergeleitet wird.

Ferner ist es bei einer vorteilhaften Ausführungsform der vorliegenden Erfindung denkbar, in dem optischen Verteiler 100 mehr als einen bewegbaren Lichtleiter 120 vorzusehen, so dass beispielsweise eingangsseitig zugeführtes Laserlicht gleichzeitig an mehrere verschiedene optische Ausgänge verteilbar ist. Es ist ebenfalls möglich, einen Strahlteiler in den Lichtleiter 120 zu integrieren, so dass dem Lichtleiter 120 eingangsseitig zugeführtes Laserlicht auf zwei sich hierdurch ergebende Ausgangsabschnitte des Lichtleiters 120 aufgeteilt wird und gleichzeitig an unterschiedliche optische Ausgänge des optischen Verteilers weiterleitbar ist.

Bei einer weiteren sehr vorteilhaften Ausführungsform des erfindungsgemäßen optischen Verteilers 100 weist der Lichtleiter 120 einen zu seinem Eingangsabschnitt 120a parallelen Ausgangsabschnitt 120b auf, vgl. Figur 6. Bei einem derartig ausgebildeten Lichtleiter 120 ist es vorteilhaft möglich, ausgangsseitig vorgesehene Lichtleitereinrichtungen 28, 28a, 28b platzsparend parallel zueinander einzubauen, und nicht radial wie in Figur 2a abgebildet. Zur Verteilung von Licht auf die nicht in Figur 6 abgebildeten, ausgangsseitig vorgesehenen Lichtleitereinrichtungen 28, 28a, 28b ist der Lichtleiter 120 gemäß Figur 6 von einem Stellglied um seine Achse D zu drehen, d.h. es ist keine Verformung des Lichtleiters 120 nötig, wodurch der Lichtleiter 120 einem besonders geringen Verschleiß unterliegt.

Neben einer vorzugsweise zentrischen Anordnung eines Abschnitts des Lichtleiters 120 in einem Rotor eines als Stellglied verwendeten Schrittmotors ist es auch möglich, den Lichtleiter 120 beispielsweise über einen Riemenantrieb oder eine z.B. mittels eines Linearstellglieds angetriebene Zahnstange anzusteuern. In beiden Fällen kann direkt an dem Lichtleiter 120 eine entsprechende Riemenscheibe oder eine Zahnung angeformt sein. Bei einer Ausbildung des Lichtleiters 120 aus Kunststoff sind derartige Antriebsmittel besonders einfach direkt an den Lichtleiter 120 anformbar.

Der Lichtleiter 120 kann neben einer einstückigen Ausbildung auch eine Kombination von verschiedenen (optischen) Materialien aufweisen.

## Patentansprüche

1. Optischer Verteiler (100) mit mindestens einem optischen Eingang (110a) und mehreren optischen Ausgängen (111a, 111b) und in den optischen Ausgängen (111a, 111b) angeordneten Lichtleitereinrichtungen (28a, 28b) zur Verteilung von Licht, insbesondere Laserlicht, zwischen dem mindestens einen optischen Eingang (110a) und mindestens einem der optischen Ausgänge (111a, 111b), wobei der optische Verteiler (100) mindestens einen bewegbar angeordneten Lichtleiter (120) aufweist und ein Stellglied (130) zur Bewegung des mindestens einen Lichtleiters (120), wobei der bewegbar angeordnete Lichtleiter (120) so durch das Stellglied (130) bewegbar ist, dass mindestens einer der optischen Eingänge (110a) über den Lichtleiter (120) mit mindestens einem der optischen Ausgänge (111a, 11b) verbindbar ist, **dadurch gekennzeichnet, dass** ein lichtleitender Querschnitt in einem Ausgangsabschnitte(120b) des Lichtleiters geringfügig kleiner ist als ein lichtleitender Querschnitt von in den optischen Ausgängen (111a, 111b) angeordneten Lichtleitereinrichtungen (28a, 28b), um einen Toleranzausgleich bezüglich der Positionierungsgenauigkeit des Lichtleiters (120) zwischen den verschiedenen Arbeitspositionen zu gewährleisten.

2. Optischer Verteiler (100) nach Anspruch 1, **dadurch gekennzeichnet, dass** ein Eingangsabschnitt (120a) des Lichtleiters (120) ortsfest ist.

3. Optischer Verteiler (100) nach einem der Ansprüche 1 oder 2, **dadurch gekennzeichnet, dass** ein Ausgangsabschnitt (120b) des Lichtleiters (120) gegenüber dem Eingangsabschnitt (120a) so gekrümmt ist, dass eine Längsachse (E) des Ausgangsabschnitts (120b) einen von 0° verschiedenen Winkel (α) mit einer Längsachse (D) des restlichen Lichtleiters (120) beziehungsweise des Eingangsabschnitts (120a) einschließt.

4. Optischer Verteiler (100) nach einem der vorstehenden Ansprüche, **dadurch gekennzeichnet, dass** der Lichtleiter (120) drehbar gelagert ist.

5. Optischer Verteiler (100) nach einem der vorstehenden Ansprüche, **dadurch gekennzeichnet, dass** der Lichtleiter (120) flexibel ist.

6. Optischer Verteiler (100) nach einem der vorstehenden Ansprüche, **dadurch gekennzeichnet, dass** ein/der Ausgangsabschnitt (120b) des Lichtleiters (120) relativ zu dem Eingangsabschnitt (120a) des Lichtleiters (120) bewegbar ist, insbesondere durch Biegen des Lichtleiters (120).

7. Optischer Verteiler (100) nach einem der vorstehenden Ansprüche, **dadurch gekennzeichnet, dass** das Stellglied (130) ein elektromagnetisches Stellglied ist, insbesondere ein Schrittmotor (131) oder ein Linearantrieb.

8. Optischer Verteiler (100) nach Anspruch 7, **dadurch gekennzeichnet, dass** das Stellglied (130) mindestens einen steuerbaren Magnet (130a, 130b), vorzugsweise einen Elektromagnet, aufweist, und dass an mindestens einem Abschnitt (120b) des Lichtleiters (120) ein magnetisches Element (125) angeordnet ist.

9. Optischer Verteiler (100) nach Anspruch 8, **dadurch gekennzeichnet, dass** das magnetische Element (125) eine permanentmagnetisierte Hülse ist beziehungsweise aufweist, wobei die Hülse vorzugsweise radial magnetisiert ist.

10. Laserbasiertes Zündsystem für eine Brennkraftmaschine (10) mit einer zentralen Laserlichtquelle (30) und mehreren, jeweils verschiedenen Zylindern der Brennkraftmaschine (10) zugeordneten dezentralen Lasereinrichtungen (26, 26a, 26b), **gekennzeichnet durch** einen optischen Verteiler (100) zur Verteilung von Laserlicht zwischen der zentralen Laserlichtquelle (30) und den dezentralen Lasereinrichtungen (26, 26a, 26b), der nach einem der vorstehenden Ansprüche ausgebildet ist.

11. Verfahren zum Betreiben eines optischen Verteilers (100) mit mindestens einem optischen Eingang (110a) und mehreren optischen Ausgängen (111a, 111b) und in den optischen Ausgängen (111a, 111b) angeordneten Lichtleitereinrichtungen (28a, 28b) zur Verteilung von Licht, insbesondere Laserlicht, zwischen dem mindestens einen optischen Eingang (110a) und mindestens einem der optischen Ausgänge (111a, 111b), wobei mindestens ein bewegbar angeordneter Lichtleiter (120) vorgesehen ist, der mittels eines Stellglieds (130) so bewegt wird, dass mindestens ein vorgebbarer optischer Eingang (110a) über den Lichtleiter (120) mit mindestens einem vorgebbaren optischen Ausgang (111a, 111b) verbunden wird, **dadurch gekennzeichnet, dass** ein lichtleitender Querschnitt in einem Ausgangsabschnitt (120b) des Lichtleiters geringfügig kleiner ist als ein lichtleitender Querschnitt von in den optischen Ausgängen (111a, 111b) angeordneten Lichtleitereinrichtungen 28a, 28b, um einen Toleranzausgleich bezüglich der Positionierungsgenauigkeit des Lichtleiters (120) zwischen den verschiedenen Arbeitspositionen zu gewährleisten.

12. Verwendung des optischen Verteilers (100) gemäß einem der Patentansprüche 1 bis 9 zur Verteilung von Laserlicht in einem laserbasierten Zündsystem für eine Brennkraftmaschine (10) von einer zentralen Laserlichtquelle (30) zu mehreren, jeweils verschiedenen Zylindern der Brennkraftmaschine (10) zugeordneten dezentralen Lasereinrichtungen (26, 26a, 26b).

## Claims

1. Optical distributor (100) having at least one optical input (110a) and a plurality of optical outputs (111a, 111b) and light guide devices (28a, 28b) arranged in the optical outputs (111a, 111b), for the purpose of distributing light, in particular laser light, between the at least one optical input (110a) and at least one of the optical outputs (111a, 111b), the optical distributor (100) having at least one movably arranged light guide (120) and an actuator (130) for moving the at least one light guide (120), the movably arranged light guide (120) being able to be moved by the actuator (130) such that at least one of the optical inputs (110a) can be connected via the light guide (120) to at least one of the optical outputs (111a, 111b), **characterized in that** a light-guiding cross section in an output segment (120b) of the light guide is slightly smaller than a light-guiding cross section of light guide devices (28a, 28b) arranged in the optical outputs (111a, 111b), in order to ensure tolerance compensation with regard to the positioning accuracy of the light guide (120) between the various operating positions.

2. Optical distributor (100) according to Claim 1, **characterized in that** one input segment (120a) of the light guide (120) is stationary.

3. Optical distributor (100) according to either of Claims 1 and 2, **characterized in that** one output segment (120b) of the light guide (120) is curved by comparison with the input segment (120a), such that a longitudinal axis (E) of the output segment (120b) encloses an angle (α) other than 0° with a longitudinal axis (D) of the residual light guide (120) or of the input segment (120a).

4. Optical distributor (100) according to one of the preceding claims, **characterized in that** the light guide (120) is supported rotatably.

5. Optical distributor (100) according to one of the preceding claims, **characterized in that** the light guide (120) is flexible.

6. Optical distributor (100) according to one of the preceding claims, **characterized in that** one/the output segment (120b) of the light guide (120) can be moved relative to the input segment (120a) of the light guide (120), in particular by bending of the light guide (120).

7. Optical distributor (100) according to one of the preceding claims, **characterized in that** the actuator (130) is an electromagnetic actuator, in particular a step motor (131) or a linear drive.

8. Optical distributor (100) according to Claim 7, **characterized in that** the actuator (130) has at least one controllable magnet (130a, 130b), preferably an electromagnet, and **in that** a magnetic element (125) is arranged on at least one segment (120b) of the light guide (120).

9. Optical distributor (100) according to Claim 8, **characterized in that** the magnetic element (125) is or has a permanently magnetized sleeve, the sleeve preferably being radially magnetized.

10. Laser-based ignition system for an internal combustion engine (10), having a central laser light source (30) and a plurality of decentral laser devices (26, 26a, 26b) respectively assigned to different cylinders of the internal combustion engine (10), **characterized by** an optical distributor (100) for distributing laser light between the central laser light source (30) and the decentral laser devices (26, 26a, 26b), which is designed according to one of the preceding claims.

11. Method for operating an optical distributor (100) having at least one optical input (110a) and a plurality of optical outputs (111a, 111b) and light guide devices (28a, 28b) arranged in the optical outputs (111a, 111b), there being provided, for the purpose of distributing light, in particular laser light, between the at least one optical input (110a) and at least one of the optical inputs (111a, 111b), at least one movably arranged light guide (120) which is moved by means of an actuator (130), such that at least one prescribable optical input (110a) is connected via the light guide (120) to at least one prescribable optical output (111a, 111b), **characterized in that** a light-guiding cross section in an output segment (120b) of the light guide is slightly smaller than a light-guiding cross section of light guide devices (28a, 28b) arranged in the optical outputs (111a, 111b), in order to ensure tolerance compensation with regard to the positioning accuracy of the light guide (120) between the various operating positions.

12. Use of the optical distributor (100) in accordance with one of Patent Claims 1 to 9 for distributing laser light in a laser-based ignition system for an internal combustion engine (10) from a central laser light source (30) to a plurality of decentral laser devices (26, 26a, 26b) respectively assigned to different cylinders of the internal combustion engine (10).

## Revendications

1. Répartiteur optique (100) présentant au moins une entrée optique (110a), plusieurs sorties optiques (111a, 111b) ainsi que des dispositifs (28a, 28b) conducteurs de lumière disposés dans les sorties optiques (111a, 111b), pour répartir de la lumière et en particulier de la lumière laser entre la ou les entrées optiques (110a) et au moins l'une des sorties optiques (111a, 111b),
le répartiteur optique (100) présentant au moins un conducteur de lumière (120) disposé de manière à pouvoir se déplacer et un organe (130) d'actionnement qui déplace la ou les conducteurs de lumière (120),
le conducteur de lumière (120) disposé de manière à pouvoir se déplacer pouvant être déplacé par l'organe d'actionnement (130) de telle sorte qu'au moins l'une des entrées optiques (110a) puisse être reliée par l'intermédiaire du conducteur optique (120) à au moins l'une des sorties optiques (111a, 111b),
**caractérisé en ce que**
une section transversale conductrice de lumière dans une partie (120b) de sortie du conducteur de lumière est légèrement plus petite qu'une section transversale conductrice de lumière des dispositifs (28a, 28b) conducteurs de lumière disposés dans les sorties optiques (111a, 111b), pour assurer une compensation des tolérances de précision de positionnement de conducteur de lumière (120) entre les différentes positions de travail.

2. Répartiteur optique (100) selon la revendication 1, **caractérisé en ce qu'**une partie d'entrée (120a) du conducteur de lumière (120) est fixe.

3. Répartiteur optique (100) selon l'une des revendications 1 ou 2, **caractérisé en ce qu'**une partie de sortie (120b) du conducteur de lumière (120) est courbée par rapport à la partie d'entrée (120a) de telle sorte qu'un axe longitudinal (E) de la partie de sortie (120b) forme avec un axe longitudinal (D) du reste du conducteur de lumière (120) ou de la partie d'entrée (120a) un angle (α) différent de 0.

4. Répartiteur optique (100) selon l'une des revendications précédentes, **caractérisé en ce que** le conducteur de lumière (120) est monté à rotation.

5. Répartiteur optique (100) selon l'une des revendications précédentes, **caractérisé en ce que** le conducteur de lumière (120) est flexible.

6. Répartiteur optique (100) selon l'une des revendications précédentes, **caractérisé en ce que** l'une des parties d'entrée (120b) du conducteur de lumière (120) est mobile par rapport à la partie d'entrée (120a) du conducteur de lumière (120), en particulier par flexion du conducteur de lumière (120).

7. Répartiteur optique (100) selon l'une des revendications précédentes, **caractérisé en ce que** l'organe d'actionnement (130) est un organe électromagnétique d'actionnement, en particulier un moteur pas à pas (131) ou un entraînement linéaire.

8. Répartiteur optique (100) selon la revendication 7, **caractérisé en ce que** l'organe d'actionnement (130) présente au moins un aimant asservi (130a, 130b) et de préférence un électroaimant et **en ce qu'**un élément magnétique (125) est disposé sur au moins une partie (120b) du conducteur de lumière (120).

9. Répartiteur optique (100) selon la revendication 8, **caractérisé en ce que** l'élément magnétique (125) présente une douille magnétisée de manière permanente ou est une telle douille, la douille étant magnétisée de préférence radialement.

10. Système d'allumage à base laser pour moteur (10) à combustion interne, doté d'une source centrale (30) de lumière laser et de plusieurs dispositifs laser (26, 26a, 26b) décentralisés associés aux différents cylindres du moteur (10) à combustion interne, **caractérisé par**
un répartiteur optique (100) qui répartit la lumière laser entre la source centrale (30) de lumière laser et les dispositifs laser (26, 26a, 26b) décentralisés et configuré selon l'une des revendications précédentes.

11. Procédé d'utilisation d'un répartiteur optique (100) présentant au moins une entrée optique (110a), plusieurs sorties optiques (111a, 111b) ainsi que des dispositifs (28a, 28b) conducteurs de lumière disposés dans les sorties optiques (111a, 111b), pour répartir de la lumière et en particulier de la lumière laser entre la ou les entrées optiques (110a) et au moins l'une des sorties optiques (111a, 111b),
au moins un conducteur de lumière (120) disposé de manière à pouvoir se déplacer étant prévu et étant déplacé au moyen d'un organe d'actionnement (130) de telle sorte qu'au moins une entrée optique (110a) prédéterminée soit reliée par l'intermédiaire du conducteur de lumière (120) à au moins une sortie optique prédéterminée (111a, 111b),
**caractérisé en ce que**
une section transversale conductrice de lumière dans une partie (120b) de sortie du conducteur de lumière est légèrement plus petite qu'une section transversale conductrice de lumière des dispositifs (28a, 28b) conducteurs de lumière disposés dans les sorties optiques (111a, 111b), pour assurer une compensation des tolérances de précision de positionnement de conducteur de lumière (120) entre les différentes positions de travail.

12. Utilisation du répartiteur optique (100) selon l'une des revendications 1 à 9 pour répartir de la lumière laser dans un système d'allumage à base laser d'un moteur (10) à combustion interne entre une source centrale (30) de lumière laser et plusieurs dispositifs laser décentralisés (26, 26a, 26b) associés aux différents cylindres du moteur (10) à combustion interne.
